# EUROPEAN PATENT APPLICATION

(11) **EP 2 669 611 A2**
(43) Date of publication of application: **04.12.2013**
(21) Application number: 13169372.3
(22) Date of filing: 27.05.2013
(51) Int. Cl.: F25D 23/02, B29C 51/10

(54) **Door for refrigerator and method for manufacturing the same**

(30) Priority: 01.06.2012 KR 20120059076
(71) Applicant: LG ELECTRONICS INC., Youngdungpo-gu Seoul 150-721 (KR)
(72) Inventor: Shim, Jinwoo, 641-711 Gyeongsangnam-do (KR); Seo, Byeongkyun, 641-711 Gyeongsangnam-do (KR)
(74) Representative: Vossius & Partner

(57) **Abstract**

Provided is a door for a refrigerator. The door for the refrigerator includes a door liner (62), an outer door connected to the door liner, an insulation material (63) disposed between the door liner (62) and the outer door, and a decoration panel (50) mounted on an outer surface of the outer door, the decoration panel (50) having a front surface and a side surface extending and bent from the front surface. The decoration panel (50) comprises a transparent synthetic resin panel (30) and a printed layer (40) disposed on one surface of the transparent synthetic resin panel and having a pattern thereon. The transparent synthetic resin panel (30) is vacuum-molded.

## Description

### BACKGROUND

The present disclosure relates to a door for a refrigerator and a method for manufacturing the same, a decoration panel, and a method and apparatus for molding a transparent synthetic resin panel.

In general, refrigerators are equipment that stores foods at a low temperature. In recent years, a decoration panel is used for improving a sense of beauty of a refrigerator.

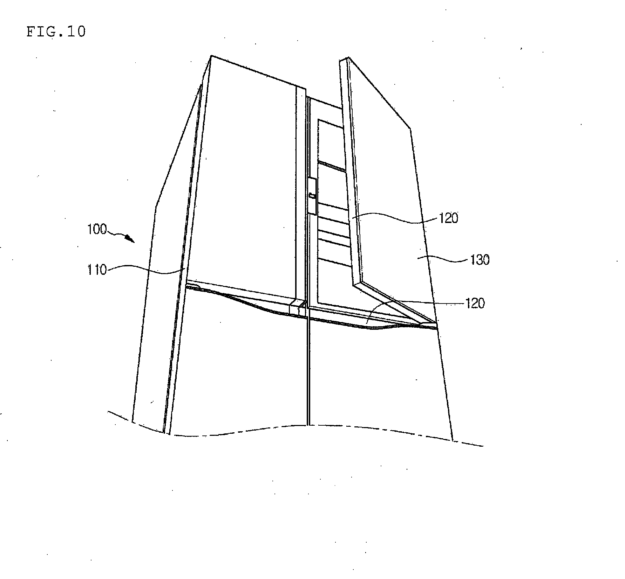

Fig. 10 is a perspective view of a refrigerator according to a related art.

Referring to Fig. 10, a refrigerator 100 according to the related art includes a main body having a storage chamber therein and a refrigerator door 110 connected to the main body to open or close the storage chamber.

The refrigerator door 110 may be provided in plurality. Also, the refrigerator door 110 may include a home bar door 120 constituting a home bar.

Also, a decoration panel 130 is disposed on the refrigerator door 110 or the home bar door 120.

A tempered glass may be used as the decoration panel of the refrigerator door according to the related art. However, the tempered glass may be heavy and expensive when compared to a panel formed of a different material.

In addition, when the tempered glass may be broken by an impact, the broken tempered glass may damage a user. Also, cost required for replacing the broken tempered glass with a new tempered glass may be vary high. Thus, it is needed that a panel formed of a different material except for the tempered glass is used as the decoration panel of the door for the refrigerator.

### SUMMARY

Embodiments provide a door for a refrigerator and a method for manufacturing the same, a decoration panel, and a method and apparatus for molding a transparent synthetic resin panel.

In one embodiment, a door for a refrigerator includes: a door liner; an outer door connected to the door liner; an insulation material disposed between the door liner and the outer door; and a decoration panel mounted on an outer surface of the outer door, the decoration panel having a front surface and a side surface extending and bent from the front surface.

The front surface is constituted by a plane and a non-plane and has a three-dimensional shape.

The decoration panel comprises a transparent synthetic resin panel and a printed layer disposed on one surface of the transparent synthetic resin panel and having a pattern thereon.

The printed layer is manufactured by attaching a sheet to the transparent synthetic resin panel or printing the sheet on the transparent synthetic resin panel.

The transparent synthetic resin panel is molded in the state where the printed layer is disposed on the transparent synthetic resin panel to manufacture the decoration panel.

The transparent synthetic resin panel is vacuum-molded.

In another embodiment, a door for a refrigerator in which an insulation material is disposed in a space defined by an outer door and a door liner is provided, wherein a decoration panel manufactured by vacuum-molding a transparent synthetic resin panel is mounted on an outer surface of the outer door.

The transparent synthetic resin panel comprises a casting poly methyl methacrylate (PMMA) sheet for molding.

A coating layer for improving a surface hardness is disposed on the transparent synthetic resin panel.

At least one portion of the decoration panel is three-dimensionally vacuum-molded.

The transparent synthetic resin panel is vacuum-molded in a state where a printed layer having a pattern is disposed on the transparent synthetic resin panel.

In further another embodiment, a door for a refrigerator includes a decoration panel defining an outer appearance of the door for the refrigerator, wherein the decoration panel is vacuum-molded in a state where a printed layer having a pattern on an inner surface of the decoration panel.

The decoration panel is manufactured by using a casting poly methyl methacrylate (PMMA) sheet for molding.

A coating layer for improving a surface hardness is disposed on the decoration panel, and the coating layer contains about 25 wt% to about 30 wt% of acrylate oligomer, about 15 wt% to about 20 wt% of polyester acrylate, about 15 wt% of urethane acrylate, about 10 wt% to about 15 wt% of polyester adhesion promoter, about 15 wt% of silica sol, and about 10 wt% of other components.

In still further another embodiment, a door for a refrigerator includes: a door liner; an outer door connected to the door liner; an insulation material disposed between the door liner and the outer door; and a decoration panel mounted on an outer surface of the outer door, the decoration panel being formed of a transparent synthetic resin material, wherein the transparent synthetic resin material comprises casting poly methyl methacrylate (PMMA) for molding.

A coating layer for improving a surface hardness is disposed on the decoration panel, and the coating layer contains about 25 wt% to about 30 wt% of acrylate oligomer, about 15 wt% to about 20 wt% of polyester acrylate, about 15 wt% of urethane acrylate, about 10 wt% to about 15 wt% of polyester adhesion promoter, about 15 wt% of silica sol, and about 10 wt% of other components.

In even further another embodiment, a method for manufacturing a door for a refrigerator includes: attaching a sheet on which a pattern is printed to a transparent synthetic resin panel; heating the transparent synthetic resin panel to seat the heated transparent synthetic resin panel on a mold in the state where the sheet is attached to the transparent synthetic resin panel; vacuum-molding the transparent synthetic resin panel seated on the mold; cutting an edge of the vacuum-molded transparent synthetic resin panel; and mounting the transparent synthetic resin panel of which the edge is cut on a front surface of the door for the refrigerator.

The vacuum-molded transparent synthetic resin panel has a three-dimensional shape.

The three-dimensionally shaped portion is disposed on the front surface of the door for the refrigerator.

In yet further another embodiment, a decoration panel manufactured by vacuum-molding a transparent synthetic resin panel after a printed layer is disposed on the transparent synthetic resin panel.

The transparent synthetic resin panel comprises a casting poly methyl methacrylate (PMMA) sheet for molding.

A coating layer for improving a surface hardness is disposed on the decoration panel, and the coating layer contains about 25 wt% to about 30 wt% of acrylate oligomer, about 15 wt% to about 20 wt% of polyester acrylate, about 15 wt% of urethane acrylate, about 10 wt% to about 15 wt% of polyester adhesion promoter, about 15 wt% of silica sol, and about 10 wt% of other components.

The printed layer is manufactured by attaching a sheet to the transparent synthetic resin panel or printing the sheet on the transparent synthetic resin panel.

Front and side surfaces of the decoration panel are vacuum-molded.

The front surface of the decoration panel is manufactured into a plane and a non-plane by the vacuum-molding.

In yet further another embodiment, a method for molding a transparent synthetic resin panel includes: forming a printed layer having a pattern on the transparent synthetic resin panel; heating the transparent synthetic resin panel to dispose the heated transparent synthetic resin panel on a mold in the state where the printed layer is formed on the transparent synthetic resin panel; and vacuum-molding the transparent synthetic resin panel disposed on the mold.

The vacuum-molded transparent synthetic resin panel has a three-dimensional shape.

In much further another embodiment, a method for vacuum-molding a transparent synthetic resin panel so that at least one portion of the transparent synthetic resin panel has a three-dimensional shape includes: attaching a sheet on which a pattern is printed to the transparent synthetic resin panel; heating the transparent synthetic resin panel to seat the heated transparent synthetic resin panel on a mold having an exhaust hole corresponding to an edge of the transparent synthetic resin panel in the state where the sheet is attached to the transparent synthetic resin panel; vacuum-molding the transparent synthetic resin panel seated on the mold; and cutting an edge of a portion of the vacuum-molded transparent synthetic resin panel corresponding to the exhaust hole.

In still much further another embodiment, a method for vacuum-molding a transparent synthetic resin panel so that at least one portion of the transparent synthetic resin panel has a three-dimensional shape includes: attaching a sheet on which a pattern designed to correspond to a pattern deformed by three-dimensionally processing the transparent synthetic resin panel is printed to the transparent synthetic resin panel; heating the transparent synthetic resin panel in the state where the sheet is attached to the transparent synthetic resin panel; and vacuum-molding the transparent synthetic resin panel in the state where the heated transparent synthetic resin panel is seated on a mold.

In even much further another embodiment, an apparatus for vacuum-molding a transparent synthetic resin panel includes: a base part; a mold part protruding from the base part to manufacture the transparent synthetic resin panel in a specific shape; and an exhaust hole defined in an edge of the mold part.

A surface contacting the transparent synthetic resin panel of the mold part comprises a plane and a non-plane.

The mold part comprises a first mold and a second mold disposed on an edge of the first mold, and the exhaust hole is defined in the second mold.

In yet much further another embodiment, a door for a refrigerator includes: a door liner; an outer door manufactured by vacuum-molding, the outer door including a printed layer on an inner surface thereof and formed of a transparent material; and an insulation material disposed between the door liner and the outer door.

The door further comprises a frame disposed between the door liner and the outer door, wherein the door liner is connected to one side of the frame, and the outer door is connected to the other side of the frame.

The outer door constituted by a plane and a non-plane and has a three-dimensional shape.

The outer door is formed of a casting poly methyl methacrylate (PMMA) material for molding

In still even further another embodiment, a door for a refrigerator in which an insulation material is disposed in a space defined by an outer door and a door liner is provided, wherein the outer door is manufactured by vacuum-molding a transparent synthetic resin panel.

The transparent synthetic resin panel comprises a casting poly methyl methacrylate (PMMA) sheet for molding.

A coating layer for improving a surface hardness is disposed on the transparent synthetic resin panel.

At least one portion of the decoration panel is three-dimensionally vacuum-molded.

The details of one or more embodiments are set forth in the accompanying drawings and the description below. Other features will be apparent from the description and drawings, and from the claims.

### BRIEF DESCRIPTION OF THE DRAWINGS

Fig. 1 is a view of an apparatus for molding a transparent synthetic resin panel according to an embodiment.

Fig. 2 is a perspective view of a mold constituting the molding apparatus of Fig. 1.

Fig. 3 is a view of a state in which a printed layer is formed on the transparent synthetic resin panel.

Fig. 4 is a view of a process in which the transparent synthetic resin panel is vacuum-molded.

Fig. 5 is a flowchart illustrating a method for molding the transparent synthetic resin panel.

Fig. 6 is a view illustrating a method for processing the vacuum-molded transparent synthetic resin panel into a decoration panel.

Fig. 7 is an exploded perspective view of a door for a refrigerator according to an embodiment.

Fig. 8 is a perspective view of the refrigerator according to an embodiment.

Fig. 9 is an exploded perspective view of a door for a refrigerator according to another embodiment.

Fig. 10 is a perspective view of a refrigerator according to a related art.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. To avoid detail not necessary to enable those skilled in the art to practice the invention, the description may omit certain information known to those skilled in the art. The following detailed description is, therefore, not to be taken in a limiting sense.

Exemplary embodiments of the present disclosure will be described below in more detail with reference to the accompanying drawings. It is also noted that like reference numerals denote like elements in appreciating the drawings even though the same elements are displayed on other drawings. Moreover, detailed descriptions related to well-known functions or configurations will be ruled out in order not to unnecessarily obscure subject matters of the present disclosure.

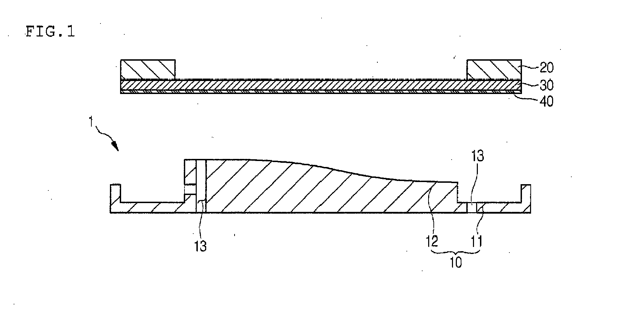

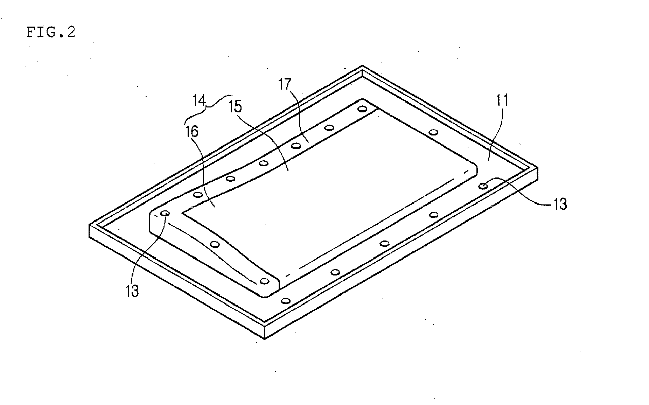

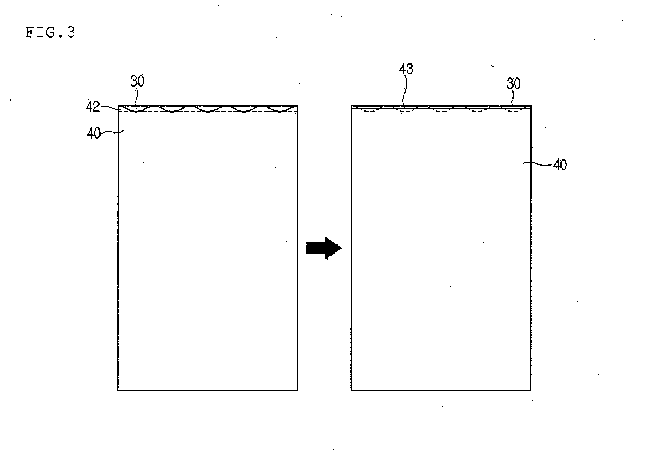

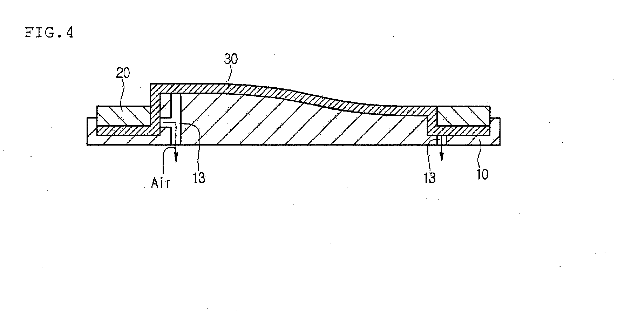

Fig. 1 is a view of an apparatus for molding a transparent synthetic resin panel according to an embodiment, Fig. 2 is a perspective view of a mold constituting the molding apparatus of Fig. 1, Fig. 3 is a view of a state in which a printed layer is formed on the transparent synthetic resin panel, and Fig. 4 is a view of a process in which the transparent synthetic resin panel is vacuum-molded.

Referring to Figs. 1 to 4, a molding apparatus 1 according to an embodiment may include a mold 10 for processing a transparent synthetic resin panel 30 in a predetermined shape and a holder 20 for holding the transparent synthetic resin panel 30.

In the current embodiment, the molding apparatus 1 may mold the transparent synthetic resin panel 30 by using a vacuum molding method (a vacuum thermal molding method).

The mold 10 may include a base part 11 and a mold part 12 protruding from the base part 11. Substantially, the transparent synthetic resin panel 30 may be molded in the same shape as that of the mold part 12.

The mold part 12 may include a first mold 14 and a second mold 17 defining an edge portion of the first mold 14. The second mold 17 is disposed on two adjacent side surfaces of the first mold 14. The first mold 14 and the second mold 15 may be integrated with each other or provided as separate parts different from each other.

In the current embodiment, after the transparent synthetic resin panel 30 is molded, a portion of the transparent synthetic resin panel 30 corresponding to the first mold 14 may be used for an application object (for example, a door for a refrigerator), and a portion of the transparent synthetic resin panel 30 corresponding to the second mold 17 may be removed.

The first mold 14 includes a plane 15 and a non-plane 16 (or a protrusion protruding from the plane 16). For example, although the non-plane 16 may be disposed on one corner of the first mold 14, the present disclosure is not limited to the position of the non-plane 16. The non-plane 16 may be rounded to improve a sense of beauty when the non-plane 16 is applied to a target object. For example, a protruding height of the non-plane 16 from the base part 11 may be greater than that of the plan 15 from the base part 11.

As a result, the transparent synthetic resin panel 30 may have a three-dimensional shape by the plane 15 and the non-plane 16.

At least one exhaust hole 13 is defined in the edge of the mold part, i.e., the second mold 17. Also, at least one exhaust hole 13 is defined in the base part 11. Since air between the transparent synthetic resin panel 30 and the mold 10 is exhausted through the exhaust hole 13 when the transparent synthetic resin panel 30 is thermally vacuum-molded, the transparent synthetic resin panel 30 may be closely attached to the mold 10. Thus, the transparent synthetic resin panel 30 may be molded in a specific shape (the same shape as that of the mold part 12).

The transparent synthetic resin panel 30 may be, for example, an acrylic material. That is, the transparent synthetic resin panel 30 may be a casting poly methyl methacrylate (PMMA) sheet for molding.

When the transparent synthetic resin panel 30 is molded and used as, for example, a decoration panel such as the door for the refrigerator, a surface of the transparent synthetic resin panel 30 may be easily damaged during the use by scratches when compared to the tempered glass.

Thus, in the current embodiment, a coating layer for improving surface hardness may be disposed on one surface or both surfaces of the transparent synthetic resin panel 30.

The coating layer may be formed on the transparent synthetic resin panel 30 by applying or spraying a coating solution on the transparent synthetic resin panel 30.

The coating solution may contain about 25 wt% to about 30 wt% of acrylate oligomer, about 15 wt% to about 20 wt% of polyester acrylate, about 15 wt% of urethane acrylate, about 10 wt% to about 15 wt% of polyester adhesion promoter, about 15 wt% of silica sol, and about 10 wt% of other components.

Thus, according to the current embodiment, the coating layer may be disposed on the transparent synthetic resin panel 30 to increase the surface hardness, thereby minimizing the surface damage.

Alternatively, a coating sheet including the coating solution may be attached to the transparent synthetic resin panel 30.

When the transparent synthetic resin panel 30 is used as the decoration panel after being molded, a printed layer 40 for improving a sense of beauty may be disposed on one surface of the transparent synthetic resin panel 30.

In the current embodiment, the coating layer may be disposed on at least front surface (a top surface of the transparent synthetic resin panel 30 in Fig. 1) of the transparent synthetic resin panel 30, and the printed layer 40 may be disposed on at least back surface (a bottom surface of the transparent synthetic resin panel 30 in Fig. 1) facing the front surface of the transparent synthetic resin panel 30. Also, when the transparent synthetic resin panel 30 is used as the decoration panel, the front surface may define an outer surface.

The printed layer 40 may be formed by attaching a printed sheet to the transparent synthetic resin panel 30 or by applying or spraying a printing solution on the transparent synthetic resin panel 30. The printed layer 40 may have various pattern shapes.

In the current embodiment, the printed layer 40 may be thermally vacuum-molded together with the transparent synthetic resin panel 30 after the transparent synthetic resin panel 30 is molded.

In the current embodiment, when the printed layer 40 is thermally vacuum-molded, the original pattern of the printed layer 40 may be distorted or deformed by the three-dimensional shape of the mold part 12. When the original pattern of the printed layer 40 is distorted or deformed, the molded transparent synthetic resin panel 30 may not be used as the decoration panel.

Thus, the printed layer 40 may be designed in pattern shape to correspond to the deformation of the shape (or pattern) due to the three-dimensional processing of the transparent synthetic resin panel 30.

For example, referring to Fig. 3, a portion of the printed layer 40 may be patterned. That is, the printed layer 40 may include a pattern design part 42.

The pattern may be designed on a position corresponding to the plane 15 of the first mold 14 or a position corresponding to the non-plane 16. For example, the pattern design part 42 may be disposed on an edge of the printed layer 40. Also, the pattern design part 42 may be designed in a wave shape.

The distortion and deformation of the pattern shape may occur by a stretched length difference of the printed layer 40 when the printed layer 40 is thermally molded. Thus, the pattern may be designed on the printed layer 40 to maintain an original shape of the pattern designed on the printed layer 40.

For example, the left drawing of Fig. 3 illustrates the printed layer 40 before being vacuum-molded, and the right drawing of Fig. 3 illustrates the printed layer 40 after being vacuum-molded. Referring to the right drawing of Fig. 3, when the printed layer 40 is vacuum-molded, the pattern design part 42 may be substantially deformed in a liner shape (see reference numeral 43) by a stretched length difference of the pattern design part 42.

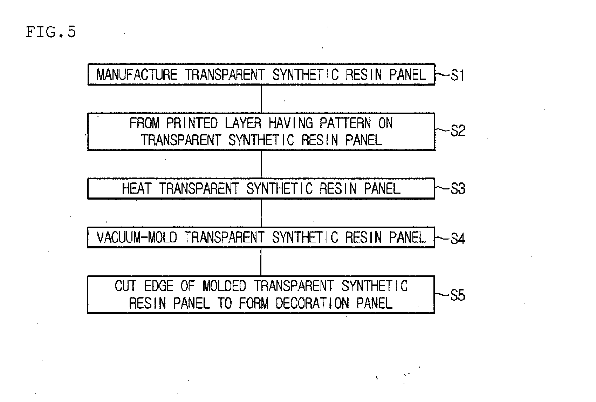

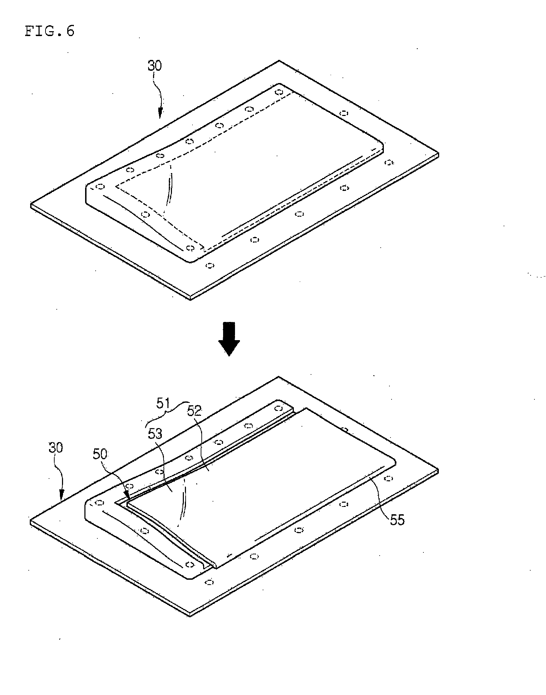

Fig. 5 is a flowchart illustrating a method for molding the transparent synthetic resin panel, and Fig. 6 is a view illustrating a method for processing the vacuum-molded transparent synthetic resin panel into a decoration panel.

Referring to Figs. 4 to 6, the transparent synthetic resin panel 30 is prepared (S1). The transparent synthetic resin panel 30 includes the coating layer as described above.

Then, the printed layer 40 on which a pattern is designed is formed on the transparent synthetic resin panel 30 (S2).

Then, the transparent synthetic resin panel 30 on which the printed layer 40 is formed is heated (S3). Here, the heating of the transparent synthetic resin panel 30 may be performed after or before the transparent synthetic resin panel 30 is fixed to the holder 20.

Then, the heated transparent synthetic resin panel 30 is thermally vacuum-molded. Particularly, the transparent synthetic resin panel 30 approaches the mold 10 in a state where the printed layer 40 faces a lower side or the mold 10.

Also, when air between the transparent synthetic resin panel 30 and the mold 10 may be exhausted through the exhaust hole 13 while the transparent synthetic resin panel 30 approaches the mold 10. Also, the transparent synthetic resin panel 30 is seated on the mold 10. Then, the transparent synthetic resin panel 30 is vacuum-molded in the state where the transparent synthetic resin panel 30 is seated on the mold 10. Then, the transparent synthetic resin panel 30 is closely attached to the mold 10, and thus is molded in the same shape as that of the mold part 12 of the mold 10 (S4).

Referring to Fig. 6, after the transparent synthetic resin panel 30 is molded, a portion of the transparent synthetic resin panel 30 may have the same shape as that of the mold part 12 of the mold 10, and the remaining portion of the transparent synthetic resin panel 30 may have the same shape as that of the base part 11.

Here, a pocked mark having a shape corresponding to that of the exhaust hole is formed in the transparent synthetic resin panel 30 while the transparent synthetic resin panel 30 is vacuum-molded. This is done because the transparent synthetic resin panel 30 corresponding to the exhaust hole 13 contacts the exhaust hole 13 while the air is exhausted through the exhaust hole 13.

The pocked mark is formed in each of a portion corresponding to the second mold 17 of the transparent synthetic resin panel 30 and a portion corresponding to the base part 11.

As described above, since the portion of the transparent synthetic resin panel 30 corresponding to the first mold 14 in the current embodiment is used as the decoration panel, edges of the transparent synthetic resin panel 30 may be cut to finally manufacture the decoration panel 50 (S5). The cut-out portion in Fig. 6 is expressed as dotted lines.

Here, the cut edge portions may be a portion corresponding to the base part 11 and a portion corresponding to the second mold 17.

Thus, according to the current embodiment, since the pocked mark is not formed in the decoration panel 50 that is manufactured after the edges of the transparent synthetic resin panel 30 are moved, it may prevent a sense of beauty from being deteriorated when the transparent synthetic resin panel 30 is used for the decoration object.

If the exhaust hole is formed in the first mold 14 of the mold 10, since the pocked mark is formed in the portion of the transparent synthetic resin panel 30 corresponding to the first mold 14 after the transparent synthetic resin panel 30 is vacuum-molded, the sense of beauty may be deteriorated.

However, in the current embodiment, since the exhaust hole 13 is formed in the second mold 17, the portion in which the pocked mark is formed may be cut while the transparent synthetic resin panel 30 is thermally vacuum-molded. Thus, it may prevent the sense of beauty of the decoration panel from being deteriorated by the pocked mark.

The decoration panel 50 manufactured by cutting the edges of the molded transparent synthetic resin panel 30 has a first surface 51 and at least one second surface 55 extending and bent from the first surface 51. For example, two second surfaces 55 may be provided and connected to each other.

For example, when the decoration panel 50 is used as the door for the refrigerator, the first surface 51 may be a front surface of the door, and the second surface 55 may be a side surface of the door.

Also, the first surface 51 may have the same three-dimensional shape as that of the first mold 14. That is, the first surface 51 may include the plane 52 and the non-plane 53 (or the protrusion). The non-plane 53 may be defined on one corner of the first surface 51.

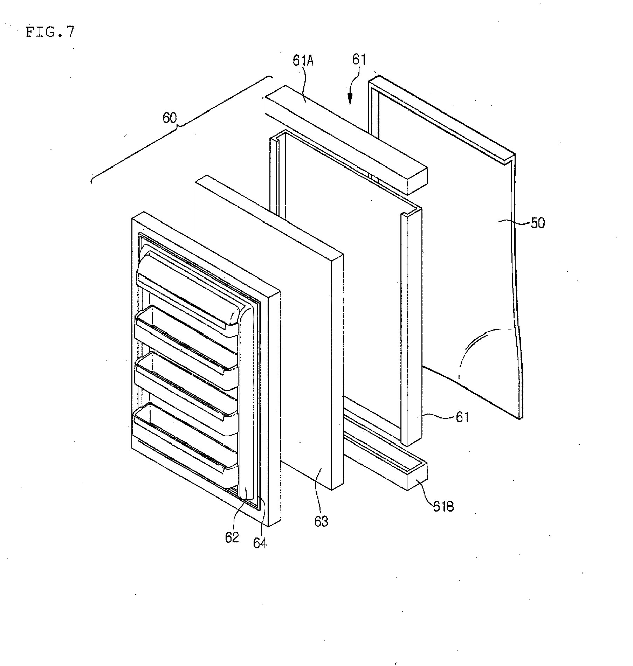

Fig. 7 is an exploded perspective view of the door for the refrigerator according to an embodiment.

As described above, the decoration panel may be manufactured by thermally vacuum-molding the transparent synthetic resin panel 30. Also, the decoration panel may be used for the door for the refrigerator. Alternatively, the decoration panel may be used for doors of other home appliances in addition to the refrigerator or object to be decorated.

A method for manufacturing the door for the refrigerator will be described with reference to Figs. 6 and 7.

A door 60 of a refrigerator may include an outer door 61, a door liner 62, an insulation material 63 disposed between the outer door 61 and the door liner 62, and a decoration panel 50 coupled to the outer door 61.

Also, the door 60 of the refrigerator may include an upper cap 61A coupled to an upper portion of the outer door 61 and a lower cap 61B coupled to a lower portion of the outer door 61. The caps 61A and 61B connect the door liner 62 to the outer door 61. Alternatively, the caps 61A and 61B may connect the decoration panel 50 to the door liner 62.

Thus, to manufacture the door 60 of the refrigerator, the outer door 61, the door liner 62, the caps 61A and 61B, and the decoration panel 50 may be separately manufactured. Here, a gasket 64 for preventing cool air from leaking may be disposed on the door liner 62.

In the current embodiment, the decoration panel 50 may be manufactured through the same method as that described in Figs. 5 and 6. Also, the outdoor 61, the caps 61A and 61B, and the door liner 62 may be manufactured through the well-known method. Thus, their detailed manufacturing descriptions will be omitted.

Then, a foam agent is injected into the outer door 61 (S25). After the injected foam agent is cured, the decoration panel 50 is connected (or mounted) to an outer surface of the outdoor door 61 to finally manufacture the door for the refrigerator.

Here, the cured foam agent serves as the insulation material 63 of the refrigerator door 60. Also, the foam agent is disposed in a space formed by the outer door 61 and the door liner 62.

The foam agent may be injected before an outer circumferential surface of the door liner 62 is connected to a flange of the outer door 61 or may be injected into the space between the door liner 62 and the outer door 61 through a hole formed in the door liner 62 after the door liner 62 is connected to the flange of the outer door 61.

Also, the decoration panel 50 may be coupled to the outer door 61 after the foam agent is injected, or the foam agent may be injected into the outer door 61 after the decoration panel 50 is coupled to the outer door 61.

As described above, the decoration panel 50 includes a first surface 51 and at least one second surface 55. The first surface 51 covers a front surface of the outer door 61, and the second surface 55 covers a side or top surface of the outer door 61.

According to the current embodiment, since a transparent synthetic resin panel is used for the decoration panel 50, the door may be light in weight and reduced in manufacturing costs.

In addition, since the decoration panel 50 has a three-dimensional shape, a sense of beauty of the door may be improved.

Also, since a coating layer for improving a surface hardness of the decoration panel 50 is formed on the decoration panel 50, surface damage of the decoration panel 50 may be minimized while the door is used.

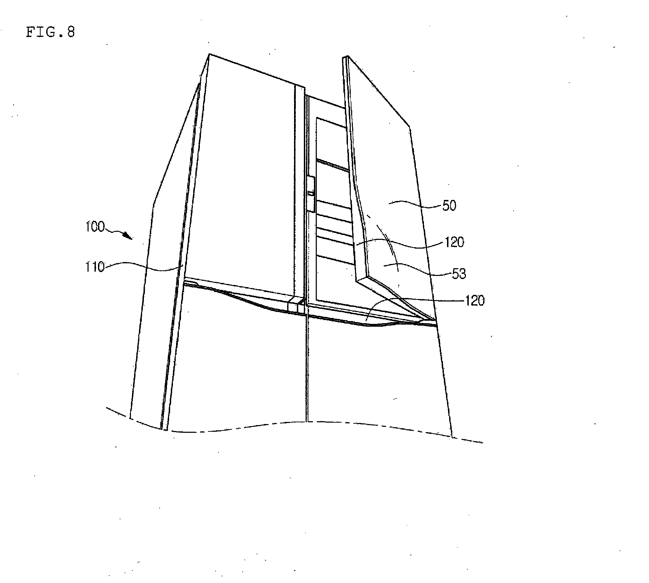

Fig. 8 is a perspective view of the refrigerator according to an embodiment.

Referring to Fig. 8, the completely manufactured refrigerator door may be installed on a refrigerator 100. Here, the refrigerator door may be used as a door 110 for opening or closing a storage chamber of the refrigerator 100 or a home bar door 120 coupled to the door 110.

The current embodiment is not limited to a kind of refrigerator. Also, although the refrigerator door is used for any parts of the refrigerator 100, the sense of beauty of the refrigerator 100 may be improved by the decoration panel.

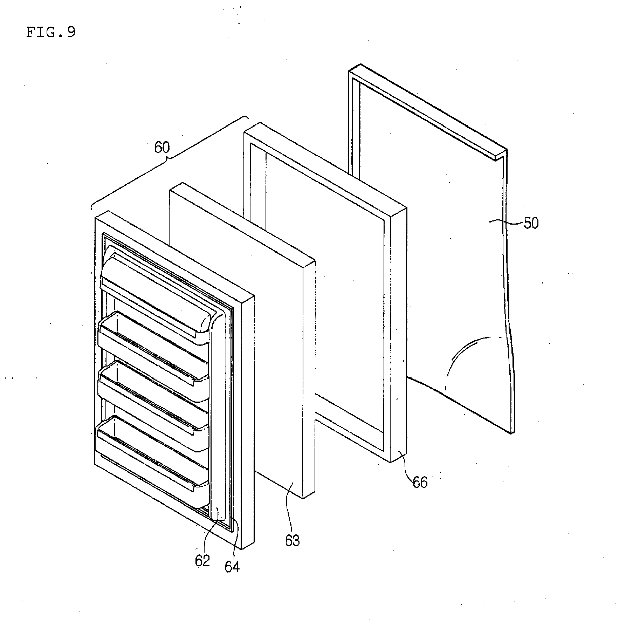

Fig. 9 is an exploded perspective view of a door for a refrigerator according to another embodiment.

The current embodiment is equal to the foregoing embodiment except for constitutions of a door for a refrigerator. Thus, only specific portions of the current embodiment will be described below.

Referring to Fig. 9, a decoration panel 50 is disposed on a refrigerator door 60 through the same method as that according to the foregoing embodiment. In the current embodiment, the decoration panel 50 may serve as an outer door.

That is, the refrigerator door 60 includes a door liner 62, a decoration panel 50 (the outer door), and a frame 66 disposed between the door liner 62 and the decoration panel 50 (the outer door) to define a side surface of the door.

Also, an insulation material 63 is disposed in a space defined by the door liner 62, the frame 66, and the decoration panel 50. That is, the insulation material 63 may contact a back surface of the decoration panel 50.

As described in the foregoing embodiment, the decoration panel 50 (the outer door) is formed of a transparent synthetic resin material and includes a printed layer.

According to the proposed embodiments, since the decoration panel mounted on the outer surface of the outer door has the front surface and the side surface extending and bent from the front surface, a gap between the outer door and the decoration panel may be reduced to prevent foreign substances from being introduced through the gap and improve a sense of unity of the outer door and the decoration panel.

Also, the front surface of the decoration panel or the outer door may have the three-dimensional shape by the plane and the non-plane to improve the sense of beauty.

Also, since the decoration panel or the outer door is formed by using the casting poly methyl methacrylate (PMMA) sheet for molding, the decoration panel or the outer door may have superior formability, a wide temperature range during the molding, superior hot water resistance, and superior chemical resistance, and also, may not be discolored when molded.

Also, since the coating layer is disposed on one surface of the decoration panel or the outer door, the surface hardness may increase to minimize the surface damage.

Also, since the pocked mark is disposed in the edge of the vacuum-molded transparent synthetic resin panel, the edge portion of the transparent synthetic resin panel may be used for the decoration panel or the outer door by removing the edge portion of the transparent synthetic resin panel. Thus, since the pocked mark does not exist on the decoration panel or the outdoor door which are decorated by removing the edge portion, it may prevent the sense of beauty from being deteriorated.

Also, since the printed layer has the pattern designed to correspond to the pattern deformed by three-dimensionally processing the transparent synthetic resin panel, the pattern of the printed layer may be maintained in its original shape after the transparent synthetic resin panel is vacuum-molded.

Also, since the transparent synthetic resin panel is used as the decoration panel, the door may be light in weight and reduced in manufacturing costs.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A door for a refrigerator, the door comprising:
a door liner (62);
a decoration panel (50) formed of a transparent material, the decoration panel having a front surface (51) and a side surface (55) extending and bent from the front surface; and
an insulation material (63) disposed between the door liner and the decoration panel.

2. The door according to claim 1, wherein the front surface (51) is constituted by a plane (52) and a non-plane (53) and has a three-dimensional shape.

3. The door according to claim 1 or 2, wherein the decoration panel (50) comprises a transparent synthetic resin panel (30) and a printed layer (40) disposed on one surface of the transparent synthetic resin panel and having a pattern thereon.

4. The door according to claim 3, wherein the printed layer (40) is a printed sheet attached to the transparent synthetic resin panel (30) or a printing solution applied on the transparent synthetic resin panel (30).

5. The door according to claim 3 or 4, wherein the transparent synthetic resin panel (30) is molded in the state where the printed layer (40) is disposed on the transparent synthetic resin panel (30) to manufacture the decoration panel.

6. The door according to claim 5, wherein the transparent synthetic resin panel (30) is vacuum-molded.

7. The door according to any of claims 3 to 6, wherein the transparent synthetic resin panel (30) comprises a casting poly methyl methacrylate (PMMA) sheet for molding.

8. The door according to any of claims 3 to 7, wherein a coating layer for improving a surface hardness is disposed on the transparent synthetic resin panel (30).

9. The door according to claim 8, wherein the coating layer contains about 25 wt% to about 30 wt% of acrylate oligomer, about 15 wt% to about 20 wt% of polyester acrylate, about 15 wt% of urethane acrylate, about 10 wt% to about 15 wt% of polyester adhesion promoter, about 15 wt% of silica sol, and about 10 wt% of other components.

10. The door according to any of preceding claims, further comprising an outer door (61) disposed between the insulation material (63) and the decoration panel (50),
wherein the decoration panel (50) is mounted on a front surface of the outer door (61).

11. The door according to claim 10, further comprising a cap (61A, 61B) connecting the outer door (61) to the door liner (62).

12. The door according to any of claims 1 to 9, further comprising a frame (66) disposed between the door liner (62) and the decoration panel (50),
wherein the door liner (62) is connected to one side of the frame (66), and
the decoration panel (50) is connected to the other side of the frame (66).

13. A method for manufacturing a door for a refrigerator, the method comprising:
attaching a sheet (40) on which a pattern is printed to a transparent synthetic resin panel (30);
heating the transparent synthetic resin panel (30) to seat the heated transparent synthetic resin panel on a mold in the state where the sheet (40) is attached to the transparent synthetic resin panel;
vacuum-molding the transparent synthetic resin panel (30) seated on the mold;
cutting an edge of the vacuum-molded transparent synthetic resin panel (30); and
finally forming the door for the refrigerator by using the transparent synthetic resin panel (30) of which the edge is cut and the door liner.

14. The method according to claim 13, wherein the vacuum-molded transparent synthetic resin panel (30) has a three-dimensional shape, and in forming the door for the refrigerator the three-dimensionally shaped portion is disposed on a front surface of the door for the refrigerator.

15. The decoration panel according to claim 13 or 14, wherein the transparent synthetic resin panel (30) comprises a casting poly methyl methacrylate (PMMA) sheet for molding.
